# EUROPÄISCHE PATENTSCHRIFT

(11) **EP 1 261 468 B1**
(45) Veröffentlichungstag und Bekanntmachung des Hinweises auf die Patenterteilung: **04.08.2004**
(21) Anmeldenummer: 01925348.3
(22) Anmeldetag: 21.02.2001
(51) Int. Cl.: B29C 44/04, B29C 44/00, A47L 13/16

(54) **REINIGUNGS- ODER APPLIKATIONSVORRICHTUNG MIT EINEM SCHWAMMKÖRPER UND VERFAHREN ZU DESSEN HERSTELLUNG**
CLEANING OR APPLICATION DEVICE COMPRISING A SPONGE BODY, AND METHOD FOR PRODUCING THE SAME
DISPOSITIF DE NETTOYAGE OU D'APPLICATION COMPRENANT UN CORPS SPONGIEUX, ET SON PROCEDE DE FABRICATION

(30) Priorität: 07.03.2000 DE 10010508
(43) Veröffentlichungstag der Anmeldung: 04.12.2002
(73) Patentinhaber: CORONET-WERKE GmbH, 69483 Wald-Michelbach (DE)
(72) Erfinder: WEIHRAUCH, Georg, 69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: PCT/EP2001/001954
(87) Internationale Veröffentlichungsnummer: WO 2001/066330

(56) Entgegenhaltungen:
- EP-A- 0 141 863
- DE-A- 3 009 587
- GB-A- 2 141 373
- US-A- 2 722 719

## Beschreibung

Die Erfindung betrifft ein Verfahren zur Herstellung eines Reinigungs- oder Applikationsschwammes sowie eine Reinigungs- oder Applikationsvorrichtung, die mit einem entsprechenden Schwamm oder Schwammkörper ausgestattet ist.

Zur Herstellung von Reinigungs- und Applikationsschwämmen, wie sie heutzutage vor allem im Haushalt Verwendung finden, ist es bekannt, zunächst einen relativ großen Block aus einem Polyurethanschaum mit Quader- oder Würfelform herzustellen. Aus diesem Schaumblock wird dann durch Schneiden und/oder Stanzen der Schwamm herausgearbeitet. Wenn zusätzlich in den Schwamm Griffmulden eingearbeitet oder dessen Kanten angefast werden sollen, muß der Schwamm einem nachfolgenden Fräsvorgang unterworfen werden. Das bekannte Herstellungsverfahren ist in vielerlei Hinsicht nachteilig:

Einerseits ist das Verfahren aufgrund der Vielzahl von nacheinander durchzuführenden Verfahrensschritten sehr aufwendig und somit teuer. Darüber hinaus werden die Schaumblöcke üblicherweise von den Schwammherstellern nicht selbst erzeugt, sondern von Dritten zugekauft, so daß sie zunächst zu dem Schwammhersteller transportiert werden müssen. Um das sehr große Transportvolumen zu vermindern, ist es bekannt, die Schaumblöcke zu komprimieren, jedoch verbleibt ein relativ großes Transportvolumen bei relativ geringem Transportgewicht, so daß der Transport der Schaumblöcke unwirtschaftlich ist. Darüber hinaus erfordern die Schaumblöcke bei dem Schwammhersteller einen großen Lagerraum und führen zu einer aufwendigen Lagerhaltung.

Beim Herausschneiden und/der Stanzen der Schwämme und insbesondere bei deren Nachbearbeitung entsteht ein sehr hoher Materialverlust bzw. Materialabfall, was nicht nur unwirtschaftlich, sondern in hohem Maße auch umweltschädigend ist. Dabei ermöglichen die Schneid-, Stanz- und Fräsvorgänge nur sehr eingeschränkte Formgebungen, wobei insbesondere Hinterschnitte oder gegenständliche Ausgestaltungen, z.B. Tier- oder Menschendarstellungen, nur sehr schwer oder gar nicht ausbildbar sind.

Ein wesentlicher Nachteil eines aus einem Schaumblock herausgearbeiteten Schwamms besteht darin, daß die an den Kanten des Schwamms liegenden Poren aufgeschnitten werden, was mit einem Stabilitätsverlust des Schwamms in diesen Bereichen verbunden ist. Bei der praktischen Anwendung des Schwammes werden jedoch insbesondere dessen Kanten und Eckbereiche für die Reinigung oder Applikation benötigt, so daß die Gebrauchseigenschaften des bekannten Schwammes in dieser Hinsicht ungenügend sind.

Für manche Anwendungsfälle ist es sinnvoll und notwendig, den Schwamm zumindest einseitig mit einem Belag zu kaschieren. Zu diesem Zweck wird ein Zuschnitt des zu kaschierenden Belages erstellt und dieser dann mittels eines Flammkaschierverfahrens aufgebracht. Dieses Vorgehen ist jedoch sehr arbeitsaufwendig und auch nicht ungefährlich.

Aus der EP-A-0 141 863 ist ein Verfahren zur Herstellung eines Schenerschwammes mit Griffmulden bekannt, wobei die Griffmulden durch entsprechende Gestaltung der Aufschäumform entstehen und das Schenerteil während des Aufschäumens mit dem Schaum verbunden wird.

Einer der wesentlichen Nachteile der bekannten Schwämme ist die gleichmäßige Poren- oder Zellstruktur über das gesamte Volumen des Schwamms. Wenn ein Schwamm befeuchtet und zur Reinigung verwendet wird, dann wird die Feuchtigkeit nicht nur in Richtung des zu reinigenden oder in sonstiger Weise zu behandelnden Gegenstandes gedrückt, sondern sie fließt auch auf die den Schwamm haltenden Finger und die den Schwamm abstützende Handfläche des Benutzers. Auf diese Weise ist ein zielgerichteter Einsatz der Reinigungsflüssigkeit bzw. des aufzutragenden Mediums nicht gegeben.

Der Erfindung liegt die Aufgabe zugrunde, ein Verfahren zur Herstellung eines Reinigungs- oder Applikationsschwammes zu schaffen, mit dem dieser auch in komplizierter Formgebung in kostengünstiger und umweltverträglicher Weise herstellbar ist. Darüber hinaus soll eine Reinigungs- oder Applikationsvorrichtung mit einem entsprechenden Schwammkörper geschaffen werden.

Diese Aufgabe wird durch ein Verfahren gemaß Anspruch 1 gelöst.

Auf diese Weise erhält der Schwammkörper bereits beim Aufschäumvorgang die gewünschte Form, so daß keine oder nur sehr geringe Nacharbeiten erforderlich sind. Gegenüber der bekannten Schwammherstellung ist die Gesamtzahl der Verfahrensschritte wesentlich reduziert, so daß sich der Schwamm in kostengünstiger Weise herstellen läßt. Die oben genannte Problematik, die mit dem Transport und der Lagerhaltung der Schaumblöcke verbunden ist, kann bei dem erfindungsgemäßen Verfahren vollständig vermieden werden. Da die Formgebung des Schwammes erfindungsgemäß durch den Formhohlraum des Formwerkzeuges und nicht durch eine Nachbearbeitung mit Materialabtragung erfolgt, können die Materialverluste sehr gering gehalten werden.

Die Ausbildung der verfestigten Außenhaut auf der Außenoberfläche des Schwammkörpers läßt sich dadurch erreichen, daß die Verfahrensparameter, beispielsweise die Werkzeug-Temperatur, die Kühlung, die Schaumdichte, der Aufschäumdruck etc., die sich durch die Zusammensetzung des Kunststoffmaterials steuern lassen, so eingestellt werden, daß auf der Außenoberfläche des Schwammkörpers die geschlossene, verfestigte Haut des Kunststoffmaterials gebildet wird. Die verfestigte Außenhaut erhöht die Stabilität des Schwammkörpers, wobei die Außenhaut in den Bereichen des Schwammkörpers, die der Produktanwendung dienen, nachfolgend zumindest bereichsweise geöffnet oder abgetragen wird, was beispielsweise durch Fräsen, Schneiden, Schleifen, Schälen, Sandstrahlen oder Anlösen erfolgen kann.

Vorzugsweise besitzt der Schwammkörper in seinem Inneren eine geschlossenzellige Struktur, die in einem nachfolgenden Verfahrensschritt bereichsweise geöffnet werden kann. Auf diese Weise ist es möglich, gewisse Bereiche des Schwammkörpers geschlossenzellig zu belassen, wodurch diese Bereiche einerseits eine erhöhte Stabilität besitzen und andererseits vermieden ist, daß die in dem Schwammkörper bei Gebrauch befindliche Flüssigkeit an diesen Bereichen austritt. Vorzugsweise wird der geschlossenzellige Schaum nur in denjenigen Bereichen des Schwammkörpers geöffnet, die der Produktanwendung dienen, so daß ein zielgerichteter Austritt der Flüssigkeit oder des zu applizierenden Mediums aus dem Schwammkörper möglich ist.

Das Öffnen einer geschlossenzelligen Schaumstruktur ist an sich bekannt und kann beispielsweise durch mechanisches Sprengen mittels Drucks, das sogenannte Crushen, erfolgen.

Die Bereiche des Schwammkörpers, die ungeöffnet bleiben und somit eine höhere Festigkeit besitzen, können als Griffabschnitte für den Benutzer dienen. Geschlossenporig können insbesondere auch diejenigen Bereiche des Schwammkörpers bleiben, die der unmittelbaren oder mittelbaren Halterung des Schwammkörpers an Griffteilen, Stielen, Knebeln etc. dienen sollen.

Bei dem Aufschäumvorgang in dem Formwerkzeug finden in der Regel Trennmittel Verwendung, die bei dem erfindungsgemäßen Verfahren durch Öffnung der geschlossenzelligen Struktur an der Oberfläche bzw. das Öffnen der Außenhaut ohne zusätzliche Maßnahmen entfernt werden.

Die Kantenfestigkeit des Schwammkörpers kann nicht nur über eine Erhöhung des Raumgewichts des Schaummaterials, sondern auch durch eine geeignete Temperaturführung in den Schäumwerkzeugen erhöht werden. Wenn die Aufschäumreaktion in einem geschlossenen und beispielsweise auf 30°C bis 60°C temperierten Werkzeug erfolgt und in den Formhohlraum mehr Kunststoffmaterial als notwendig eingefüllt wird, so vernetzt dieses Material unter Verdichtung zu einer härteren Struktur mit der dichteren Außenhaut, die kontinuierlich in einem zelligen Kern übergeht. Durch geeignete Wahl von Temperatur und Materialgemischeingabe in den Formhohlraum können auf diese Weise gezielte Schaumstrukturen und Oberflächenstrukturen mit hohen Kantenfestigkeiten erreicht werden.

Wenn an dem Schwammkörper in oben genannter Weise stabilere Halte- oder Griffabschnitte oder abgedichtete Bereiche ausgebildet werden sollen, wird die Außenhaut in diesen Abschnitten des Schwammkörpers nicht geöffnet.

Als Material für den Schwammkörper hat sich ein Polyurethan-Weichschaum bewährt, dessen Schaumdichte im Bereich von 25 kg/m³ bis 80 kg/m³ liegen kann. Insbesondere kann auch ein Polyester-PUR-Schaum Verwendung finden.

In Weiterbildung der Erfindung kann vorgesehen sein, daß der Schwammkörper aus mehreren unterschiedlich strukturierten Schwammkörperabschnitten besteht. Dabei können die Schwammkörperabschnitte vorgefertigt und anschließend durch Kleben oder Schweißen zusammengefügt werden.

Eine bevorzugte Herstellungsmöglichkeit ist dadurch gegeben, daß der Formhohlraum des Formwerkzeugs mit einer oder mehreren Trennwänden insbesondere in Form von Schiebern in mehrere Kammern unterteilt wird. In jede Kammer wird ein Schaummaterial eingefüllt und zur Reaktion gebracht. Vor dem Ende der Aufschäumreaktion werden die Trennwänden beispielsweise durch Ziehen der Schieber entfernt, wodurch das Material in den Einzelkammern sich verbinden kann. Dabei können die Kammern durch die Trennwände vollständig voneinander getrennt sein, es ist jedoch beispielsweise auch möglich, daß die Kammern in vorbestimmten Abschnitten, beispielsweise im Zentralbereich des Formhohlraums in Verbindung stehen, so daß in diesem Bereich eine Verbindung bzw. eine Vermischung der beiden Schaumstrukturen ungehindert stattfindet, während im äußeren Umfangsbereich des Schwammkörpers aufgrund der dort befindlichen Trennwänden eine klare Abgrenzung der unterschiedlichen Strukturbereiche entsteht. In dem Zentralbereich des Schwammkörpers, der vorzugsweise das überwiegende Volumen des Schwammkörpers umfaßt, entsteht somit eine intensive Verbindung der beiden Strukturen, während in einem relativ kleinen Rand- oder Umfangsbereich eine exakte Abgrenzung der beiden Strukturen über eine geringe Tiefe möglich ist. Dabei kann der Schwammkörper auch aus mehreren Schichten gleicher oder unterschiedlicher Ausdehnung aufgebaut sein.

In bevorzugter Weiterbildung der Erfindung ist vorgesehen, daß in dem Schwammkörper eine Vorratskammer für ein Reinigungsmedium oder ein zu applizierendes Medium mit mindestens einer zur Außenseite des Schwammkörpers verlaufenden Füllöffnung ausgebildet wird. In die Vorratskammer kann das zu applizierende Medium, bei dem es sich um eine Flüssigkeit, ein Puder, ein Pulver, um Tabletten oder Kapseln handeln kann, angeordnet, wobei das Medium bei Gebrauch des Schwammkörpers der Arbeits- oder Applikationsoberfläche des Schwammkörpers zugeführt wird, was entweder durch die offenzellige Struktur des Schwammkörpers in diesem Bereich und/oder durch zusätzliche Applikationskanäle, die beispielsweise gebohrt sein können, erreicht wird. Das erfindungsgemäße Verfahren des Aufschäumens des Schwammkörpers in dem Formwerkzeug läßt sehr viele Möglichkeiten für die Ausgestaltung der Vorratskammer in Form eines in den Schwammkörper eingebrachten Hohlraums offen. Wenn an dem Schwammkörper ein vorgefertigtes Griffteil insbesondere aus Kunststoff angebracht wird, kann dieses die Vorratskammer für das zu applizierende Medium enthalten oder zumindest zusammen mit einer Oberfläche des Schwammkörpers bilden. Zu diesem Zweck kann das Griffteil eine Füllöffnung aufweisen, durch die das zu applizierende Medium in die Vorratskammer eingefüllt bzw. nachgefüllt werden kann. Die Füllöffnung läßt sich durch einen Verschluß verschließen, bei dem es sich um einen angeformten Deckel, Stopfen oder ein ähnliches Verschlußelement handeln kann. In bevorzugter Ausgestaltung ist die Vorratskammer für das zu applizierende Medium in dem Raum zwischen dem Schwammkörper und dem aufgesetzten Griffteil ausgebildet.

Wenn ein Abschnitt des Schwammkörpers zur Bildung eines Halteabschnitts ungeöffnet bleibt, kann dieser außenseitig gerillt, profiliert oder strukturiert sein, um dem Benutzer das Erfassen des Schwammkörpers und dessen Führung während dessen Einsatzes zu erleichtern.

Wenn an dem Schwammkörper ein separates Griffteil angebracht wird, wird dieses in oben genannter Weise insbesondere an einem ungeöffneten Abschnitt des Schwammkörpers befestigt, wobei zur Befestigung vorzugsweise eine Verrastung bzw. Verspannung des Schwammkörpers in dem Griffteil vorgesehen ist, so daß das Griffteil auch bei abgenutztem Schwammkörper weiterverwendet und mit einem neuen Schwammkörper versehen werden kann. Dabei kann die Aufnahme des Griffteils von dem Schwammkörper entweder vollständig ausgefüllt werden, es ist jedoch auch möglich, im Inneren des Griffteils oberhalb des Schwammkörpers einen Freiraum zu belassen, der beispielsweise als Vorratskammer für das zu applizierende Medium in oben genannter Weise dienen kann.

In Weiterbildung der Erfindung ist vorgesehen, daß in den Schwammkörper ein Innenbeutel eingebettet wird, der von der Außenseite des Schwammkörpers zugänglich ist. Insbesondere ist dieser Innenbeutel als Handschuh beispielsweise aus Gummi oder Kunststoff ausgebildet, so daß ein Benutzer den Handschuh über seine Hand stülpen kann und somit einen an seiner Hand angebrachten Schwammkörper trägt, bei dessen Benutzung er mit dem zu applizierenden Medium oder der Reinigungsflüssigkeit nicht in Kontakt kommt.

Der erfindungsgemäße Formschäumvorgang erlaubt das Ausbilden weiterer Elemente am Schwammkörper. Beispielsweise kann an dem Schwammkörper eine Aufhängeöse angeformt sein, oder es ist auch möglich, einen Verschlußpfropfen für die Füllöffnung der Vorratskammer in den Schwammkörper unverlierbar zu integrieren. Darüber hinaus kann auch ein Griffteil beispielsweise über ein Scharniergelenk mit dem Schwammkörper verbunden und zusammen mit diesem hergestellt sein, so daß das Griffteil nach der Entnahme aus dem Formwerkzeug lediglich in eine am Schwammkörper festgelegte Position geschwenkt wird.

Die Arbeits- oder Applikationsflächen des Schwammkörpers können strukturiert sein. Dabei können die Oberflächenstrukturen sowohl einer Reinigungs- oder Applikationsfunktion oder auch der Information oder Dekoration dienen. Die Strukturierung kann relativ flach und flächenartig oder auch stift- bzw. borstenartig ausgebildet sein. Dabei können die hervorstehenden Oberflächenbereiche verschlossen bleiben oder durch Beseitigung der Außenhaut auch geöffnet werden. Auf die Oberfläche des Schwammkörpers kann durch weitere Maßnahmen wie Polieren, Galvanisieren, oder Erodieren des Formhohlraums Einfluß genommen werden.

Der Schwammkörper kann antimikrobiell ausgerüstet werden. Dazu werden antimikrobielle Wirkstoffe in das aufzuschäumende Ausgangsmaterial oder in den Hohlraum des Formwerkzeuges eingegeben. Bei den antimikrobiellen Wirkstoffen kann es sich insbesondere um wasserlösliche Wirkstoffe wie Xylit, Chlorhexidin-Salze oder Cetylpyridiniumchloriol handeln. Auch eine nachträgliche Ausrüstung des Schwammkörpers ist möglich, indem dieser mit antimikrobiellen Mitteln getränkt wird oder die antimikrobiellen Mitteln in flüssiger, pastöser, pulverförmiger oder fester Form in Hohlräume des Schwammkörpers gegeben werden. Es kann sich dabei um speziell zu diesem Zweck vorgesehene, separate Hohlräume handeln. Es ist jedoch auch möglich, die antimikrobiellen Mittel zu den Reinigungsmitteln insbesondere in Form flüssiger Reinigungsmittel hinzuzugeben. Wenn die antrimikrobiellen Mittel in einen Hohlraum des Schwammkörpers mit nicht oder nur wenig geöffneten Wandungen eingegeben werden, bleibt das Mittel über eine lange Zeitdauer wirksam. Dies gilt grundsätzlich auch für Reinigungs- und Applikationsmedien. Die geschlossene Außenhaut im Handhabungsbereich trägt zur Vermeidung des unerwünschten Austritts bei und fördert den zielgerichteten Einsatz dieser Mittel.

Der Schwammkörper kann mit mehreren, voneinander getrennt liegenden Kammern versehen sein, in denen Mittel aufgenommen sind, die bei Kontakt miteinander reagieren können. Durch die Zellstruktur des Schwammkörpers und/oder das Zusammenpressen des Schwammkörpers bei Gebrauch werden diese Mittel zusammengeführt. Auf diese Weise ist eine kontinuierliche Dosierung durch die Zellstruktur oder eine durch den Preßdruck auf den Schwammkörper hervorgerufene Zwangsdosierung möglich.

Die Bereiche des Schwammkörpers, in denen die weitgehend geschlossene Außenhaut verbleibt, lassen sich durch Sandstrahlen, Ätzen, Drucken, Siebdrucken, Tintenstrahldrucken oder Lasern mit Informationen und/oder Dekorierungen versehen.

Insbesondere kann vorgesehen sein, daß der Schwammkörper auf seiner Außenoberfläche abschnittsweise mit einem Belag versehen wird. Dies kann insbesondere dadurch erreicht werden, daß der Belag vor dem Aufschäumen des Schwammkörpers in das Formwerkzeug eingelegt wird. Damit ist der besondere Vorteil verbunden, daß das Kaschiermaterial auch teilflächig oder mehrstückig eingelegt und auf der Handhabungs-, Arbeits- oder Applikationsfläche des Schwammkörpers verteilt werden kann. Die Kaschiermaterialien können infolge der guten Haftung von PU-Schäumen an allen möglichen Materialien fast beliebig ausgewählt werden. Es kann sich dabei um Schleiffolien, Stoffe, gespritzte Flächengebilde aus Elastomer beispielsweise mit Nocken, Stiften oder Borsten oder auch um Silikonborsten handeln. Insbesondere vorteilhaft sind entsprechende Einlagen an Ecken und Kanten des formgeschäumten Schwammkörpers. In die Einlagen oder auch direkt auf den Schwammkörper können auch Abrasivmaterialien aufgebracht werden. Aufgrund des Aufschäumens des Schwammkörpers können an diesem auch Gegenstände aus Materialien ohne Affinität durch Umschäumen eingebettet werden, wobei es sich beispielsweise um Aufhängeschlaufen oder Metallösen handeln kann.

Eine erfindungsgemäße Reinigungs- oder Applikationsvorrichtung umfaßt einen nach dem vorstehend geschilderten Verfahren herstellbaren Schwammkörper, wobei vorgesehen ist, daß an dem ungeöffneten Abschnitt des Schwammkörpers ein Griffteil angebracht ist.

Weitere Einzelheiten und Merkmale der Erfindung sind aus der folgenden Beschreibung von Ausführungsbeispielen unter Bezugnahme auf die beigefügten Zeichnungen ersichtlich. Es zeigen:
- Fig. 1: eine schematische Darstellung eines Formwerkzeuges zur Durchführung des erfindungsgemäßen Verfahrens,
- Fig. 2: einen Längsschnitt eines Schwammkörpers nach dem Aufschäumen,
- Fig. 3: einen Schwammkörper nach einer Nachbearbeitung,
- Fig. 4: einen Schwammkörper mit einem integrierten Griffabschnitt nach einer anderen Nachbearbeitung,
- Fig. 5: einen Schwammkörper mit separatem Griffteil vor dessen Aufsetzen,
- Fig. 6: den Schwammkörper gemäß Fig. 5 mit aufgesetzten Griffteil,
- Fig. 7: einen Schwammkörper mit Griffteil in alternativer Ausgestaltung,
- Fig. 8: einen Schwammkörper mit integriertem Griffteil,
- Fig. 9: einen Schwammkörper mit integriertem Verschlußteil,
- Fig. 10: einen Schwammkörper mit strukturierter Arbeitsfläche gemäß einem ersten Ausführungsbeispiel,
- Fig. 11: einen Schwammkörper mit strukturierter Oberfläche gemäß einem alternativen Ausführungsbeispiel,
- Fig. 12: einen Schwammkörper mit strukturierter Oberfläche gemäß einem weiteren Ausführungsbeispiel,
- Fig. 13: einen Schwammkörper mit Vorratskammer für das zu applizierende Medium,
- Fig. 14: einen Schwammkörper mit einem selbstdichtenden Verschluß der Vorratskammer,
- Fig. 15: den Schwammkörper gemäß Fig. 14 in geöffneter Stellung,
- Fig. 16: einen Schwammkörper mit integrierter Aufhängeöse,
- Fig. 17: einen Querschnitt durch den Schwammkörper gem. Fig. 16,
- Fig. 18: einen Schwammkörper mit aufsetzbarem Griffteil und integrierter Vorratskammer,
- Fig. 19: die Reinigungsvorrichtung gemäß Fig. 18 mit geöffneter Vorratskammer,
- Fig. 20: einen Schwammkörper mit oberflächiger Kaschierung,
- Fig. 21: den Schwammkörper gem. Fig. 20 mit nachladbarer Patrone,
- Fig. 22: einen handschuhartigen Schwammkörper mit seitlicher Vorratskammer,
- Fig. 23: den Verschluß der Vorratskammer gem. Fig. 22 in geöffneter Position,
- Fig. 24: den Verschluß gem. Fig. 23 in geschlossener Position,

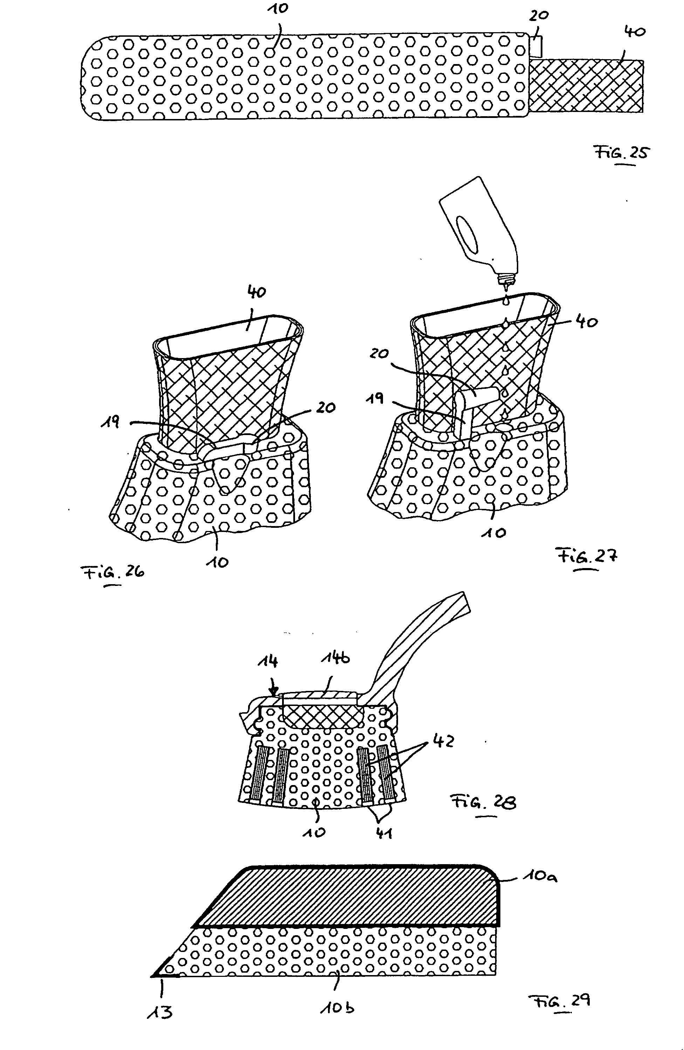

- Fig. 25: einen Schwammkörper mit eingebettetem Innenbeutel in Form eines Handschuhs,
- Fig. 26: den Schwammkörper gem. Fig. 25 mit angeformtem Verschlußteil in geschlossener Position,
- Fig. 27: das Verschlußteil gem. Fig. 26 in geöffneter Position,
- Fig. 28: einen Schwammkörper mit integrierten Borstenbündeln,
- Fig. 29: einen Schwammkörper mit verstärkten Eckbereichen und
- Fig. 30, 31, 32, 33 und 34: Schwammkörper in gegenständlichen Darstellungen.

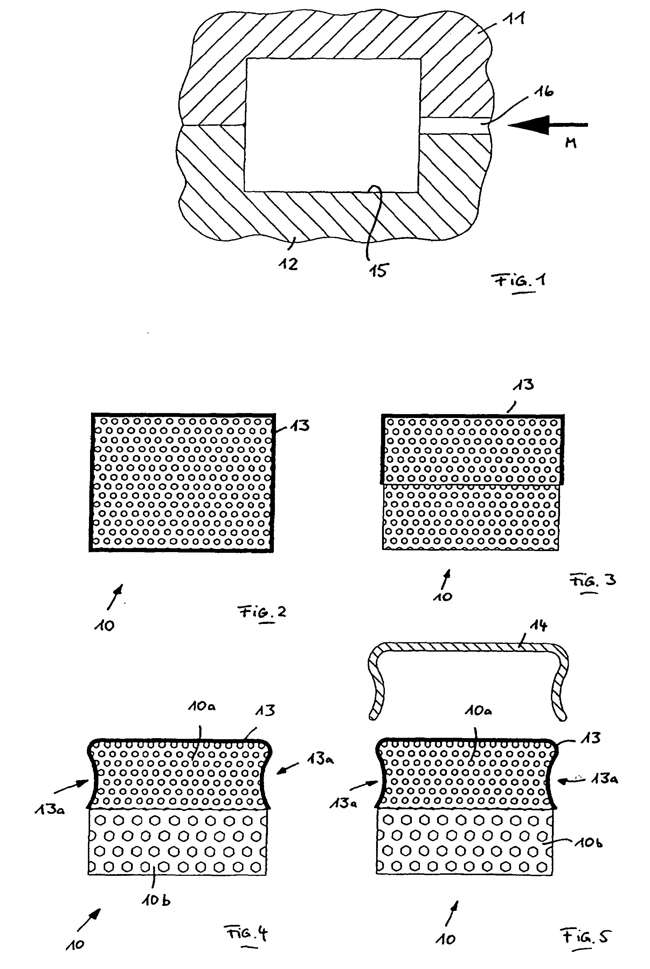

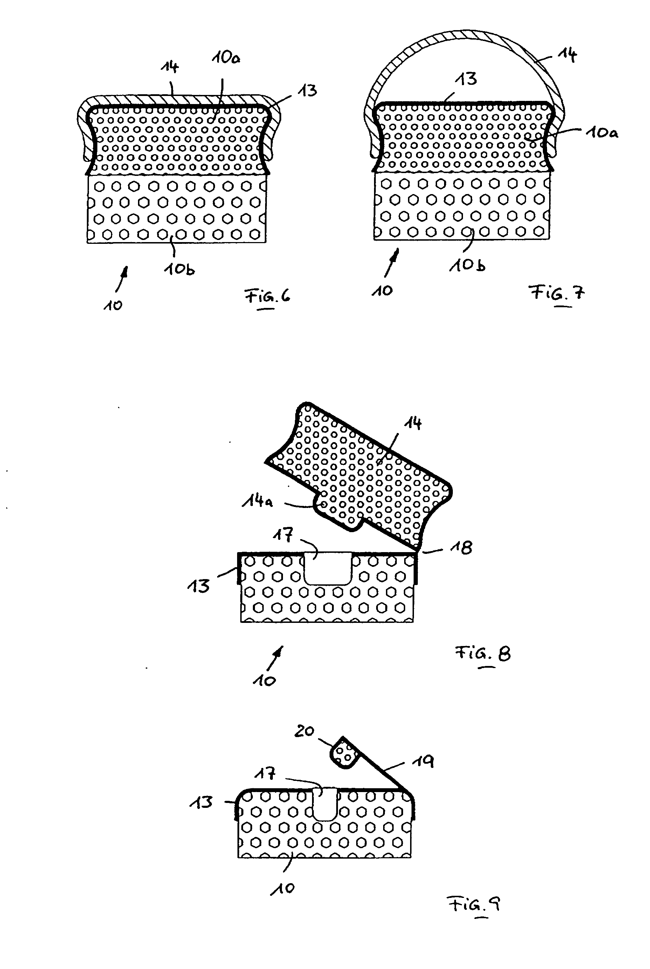

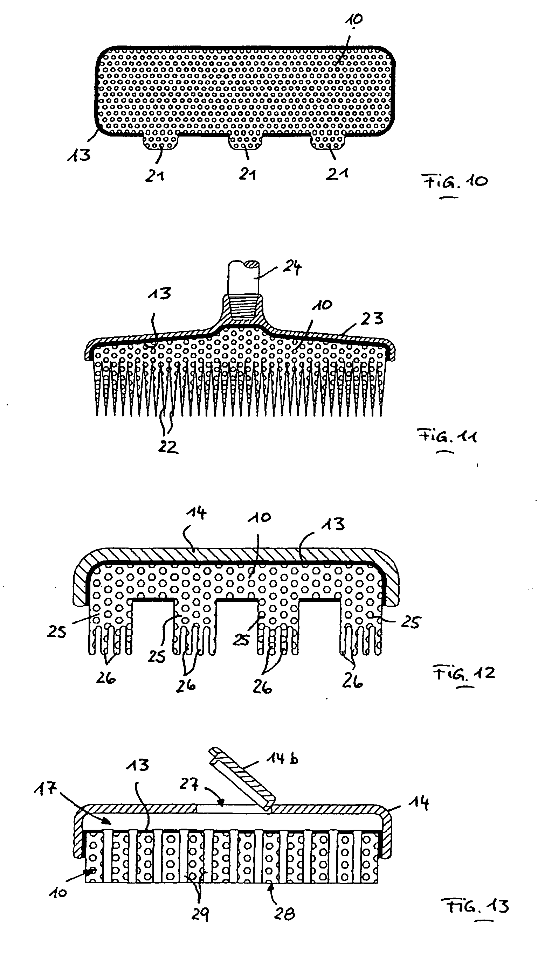

Fig. 1 zeigt schematisch ein Formwerkzeug zur Herstellung eines Schwammkörpers nach dem erfindungsgemäßen Verfahren. Das Formwerkzeug umfaßt zwei Formhälften 11 und 12, die zwischen sich einen Formhohlraum 15 definieren. Über einen Zuführkanal 16 kann ein aufschäumendes Kunststoffmaterial, bei dem es sich insbesondere um einen Polyurethan-Weichschaum handelt, in den Formhohlraum 15 eingebracht und dort aufgeschäumt werden, wie durch den Pfeil M angedeutet ist. Die Größe und Form des Formhohlraums 15 entspricht dabei im wesentlichen der endgültigen Gestalt oder Bauform des Schwammkörpers. Nach Öffnen des Formwerkzeuges ergibt sich ein Schwammkörper 10 mit einer inneren, gleichmäßigen geschlossenzelligen Struktur und einer kontinuierlich geschlossenen, verfestigten Außenhaut 13, die relativ stabil. ist und sich durch gewählte Einstellung der Verfahrensparameter während des Aufschäumvorganges auf der Außenseite des Schwammkörpers 10 ausbilden läßt, wie es in Fig. 2 dargestellt ist. Die Außenhaut 13 kann abschnittsweise aufgebrochen werden, so daß sich der in Fig. 3 dargestellte Schwammkörper 10 mit einem kontinuierlichen inneren geschlossenzelligen Bereich ergibt, dessen unterer Bereich von der Außenhaut 13 befreit ist. Die verbleibende feste Außenhaut 13 kann als stabiler Griffabschnitt für den Benutzer oder zur Anbringung eines separaten Griffteils verwendet werden.

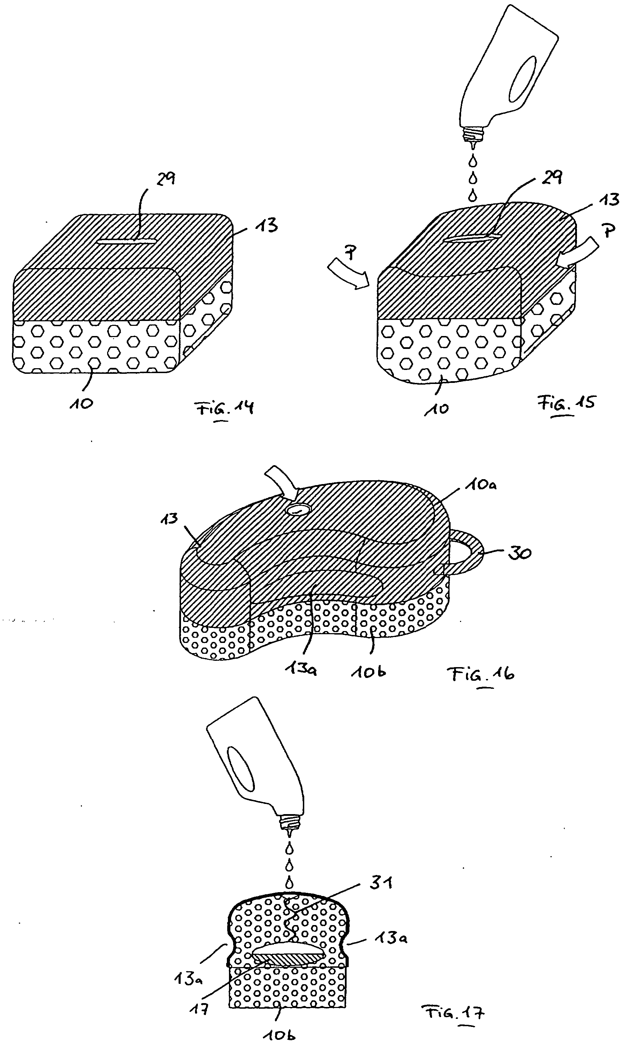

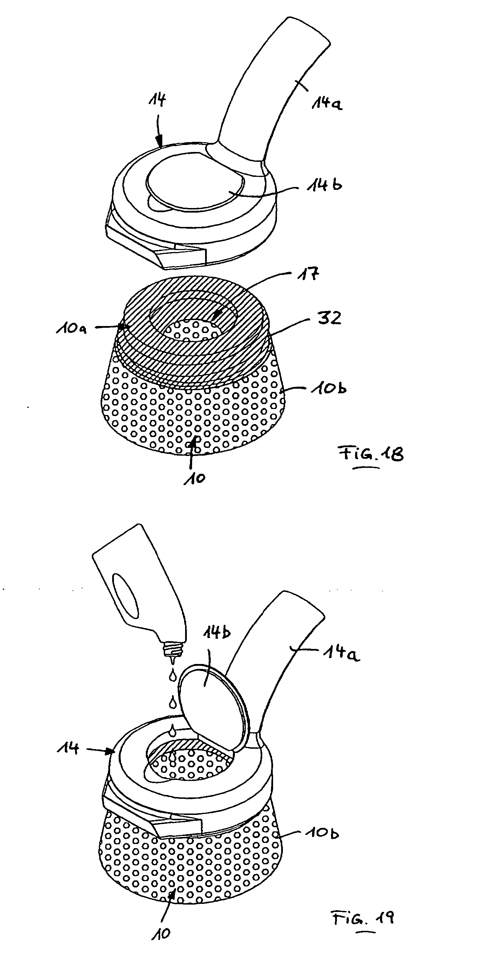

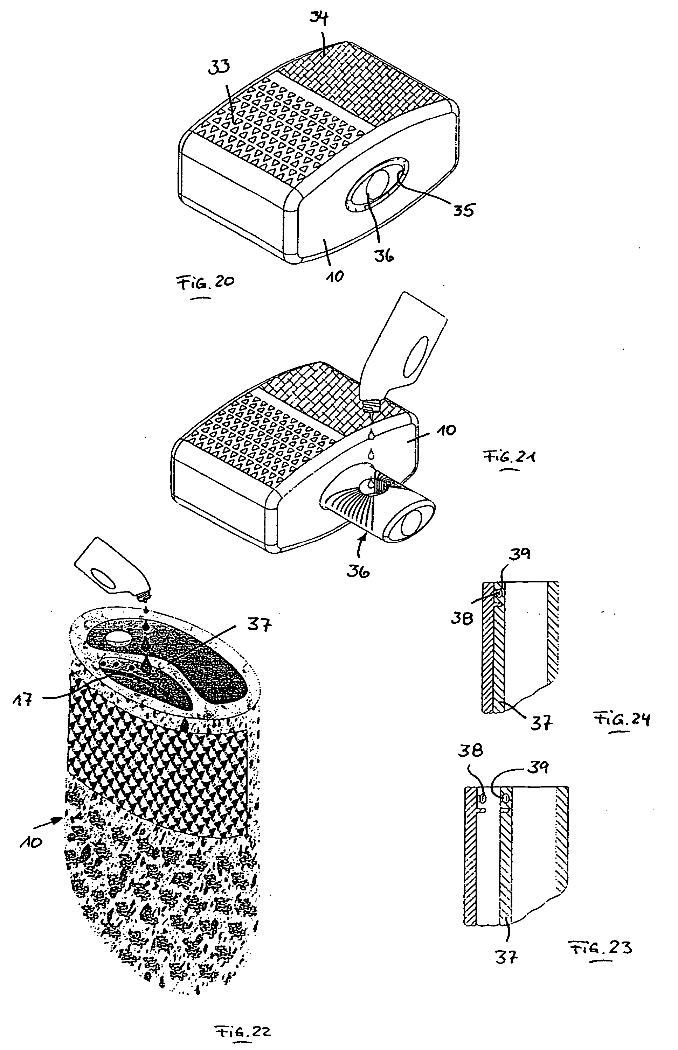

Der Schwammkörper 10 gemäß Fig. 4 unterscheidet sich von dem Schwammkörper gemäß Fig. 3 dadurch, daß der Schwammkörper 10 in seinem unteren Bereich 10b eine nachträglich geöffnete Zellstruktur besitzt, während der obere Bereich 10a geschlossenzellig bleibt und von der festen Außenhaut 13 umgeben ist. Der geschlossenzellige Bereich 10a besitzt eine größere räumliche Stabilität als der offenzellige Bereich 10b und kann für einen Benutzer als Griff- oder Halteabschnitt dienen. Dabei sind zusätzlich in den seitlichen Rändern des oberen Bereichs nach innen weisende Ausnehmungen 13a eingeformt, die das Ergreifen des Schwammkörpers 10 erleichtern oder zur formschlüssigen Anbringung eines separaten Griffteils 14 dienen können, wie es in Fig. 5 angedeutet ist. Das haubenartige, nach unten offene separate Griffteil 14 wird von oben auf den verfestigten Abschnitt des Schwammkörpers derart aufgesetzt, daß seine Seitenteile unter elastischer Verformung in die Ausnehmungen 13a einrasten, so daß das Griffteil 14 auf dem Schwammkörper 10 fest gehalten ist. Der montierte Zustand des Griffteils 14 ist in Fig. 6 dargestellt, wobei der Schwammkörper den Innenraum des Griffteils 14 vollständig ausfüllt. Alternativ ist es jedoch auch möglich, daß der Innenraum des Griffteils 14 von dem Schwammkörper 10 nur teilweise ausgefüllt ist, wie es in Fig. 7 dargestellt ist. Fig. 8 zeigt einen Schwammkörper 10 mit einem im unteren Bereich geöffneten bzw. von der Außenhaut befreiten Abschnitt, während im oberen Bereich die Außenhaut 13 5 verblieben ist. Auf der Oberseite des Schwammkörpers 10 ist eine Ausnehmung eingeformt, die eine Vorratskammer 17 für ein Reinigungsmittel oder ein zu applizierendes Medium bildet. Über ein Scharniergelenk 18 einstückig an dem Schwammkörper 10 angeformt ist ein Griffteil 14, das vollständig von einer verfestigten Außenhaut umgeben ist und auf seiner der Oberseite des Schwammkörpers 10 zugewandten Oberfläche einen stopfenartigen Vorsprung 14a besitzt, der die Vorratskammer 17 von oben abdichten kann, wenn das Griffteil 14 um das Scharniergelenk 18 geschwenkt wird und auf der Oberseite des Schwammkörpers 10 zu liegen kommt. Bei der in Fig. 9 dargestellten alternativen Ausgestaltung ist an den Schwammkörper 10 ein Verschlußstopfen 20 angeformt, der über einen Verbindungssteg 19 mit dem Schwammkörper verbunden ist und die oberseitige Einfüllöffnung der Vorratskammer 17 verschließen kann.

Die Fig. 10 bis 12 zeigen Schwammkörper mit strukturierter Oberfläche. Gemäß Fig. 10 besitzt der Schwammkörper 10 auf seiner unteren Arbeitsfläche mehrere vorstehende flächige Bereiche 21 relativ geringer Höhe. Wenn der Schwammkörper 10 aus dem Formwerkzeug entnommen wird, ist er vollständig mit einer festen Außenhaut 13 umgeben. Diese wird nur im Bereich der vorstehenden Bereiche 21 geöffnet, während auch die zwischen den Bereiche 21 liegenden Abschnitte der unteren Arbeitsfläche durch die Außenhaut 13 verschlossen bleiben.

Fig. 11 zeigt einen aus einem Schwammkörper gebildeten Besen. Zu diesem Zweck ist der Schwammkörper auf seiner Unterseite mit einer Vielzahl von nach unten frei auskragenden Fingern 22 versehen, die von der Außenhaut 13 befreit sind. Im oberen Bereich, in der die Außenhaut 13 verblieben ist, ist der Schwammkörper 10 von einem Halteteil 23 umgriffen, das mit einem Besenstiel 24 verbunden ist.

Der Schwammkörper gem. Fig. 12 weist auf seiner Unterseite nach unten vorstehende Vorsprünge 25 auf, die ihrerseits an ihrer Unterseite mit borstenartigen Fingern 26 versehen sind. Die Vorsprünge 25 einschließlich der Finger 26 sind von der stabilen Außenhaut 13 befreit. In dem oberen Bereich des Schwammkörpers 10 ist dieser von einem separaten aussteifenden Griffteil 14 eingefaßt.

Fig. 13 zeigt einen Schwammkörper 10, der in seinem oberen Bereich ein vorgefertigtes kappenartiges Griffteil 14 trägt, wobei zwischen der Oberseite des Schwammkörpers 10 und dem Griffteil 14, d.h. in dessen Innenraum, eine Vorratskammer 17 für ein zu applizierendes Medium ausgebildet ist. Das Griffteil 14 besitzt eine einstückig angeformte schwenkbare Klappe 14b, mit der eine Einfüllöffnung 27 der Vorratskammer 17 wahlweise geöffnet oder geschlossen werden kann.

Der untere Bereich des Schwammkörpers 10 ist in genannter Weise geöffnet und von der Außenhaut befreit. Zwischen der Vorratskammer 17 und der entgegengesetzten Applikationsfläche 28 des Schwammkörpers 10 erstrecken sich eine vielzahl von Kanälen 29. Die Kanäle 29 können so dimensioniert und ausgerichtet sein, daß puder- oder pulverförmige Stoffe aus der Vorratskammer 17 der Applikationsfläche 28 zugeführt und appliziert werden können. Aus Stabilitätsgründen ist die von dem Griffteil 14 übergriffene Oberseite des Schwammkörpers bis auf die Mündungsöffnungen der Kanäle 29 nicht von der Außenhaut 13 befreit. Wenn der Benutzer den Schwammkörper 10 unter Druck setzt, führt dies zu einer Verwirbelung des Pulvers in der Vorratskammer 17 und somit zu dessen Lockerung.

Fig. 14 zeigt einen Schwammkörper 10, in dessen oberem Bereich die stabile Außenhaut 13 stehengeblieben ist. Auf der Oberseite des Schwammkörpers ist ein Spalt oder Schlitz 29 ausgebildet, der gegebenenfalls mit einer im Inneren des Schwammkörpers 10 in nicht dargestellter Weise ausgebildeten Vorratskammer für ein zu applizierendes Medium in Verbindung stehen kann. Falls eine Vorratskammer ausgebildet ist, ist diese über den Schlitz 29 von der Außenseite zugänglich. Der Schlitz 29 auf der Oberseite des Schwammkörpers 10 ist im Normalzustand des Schwammkörpers aufgrund der Eigenelastizität des Schaummaterials geschlossen. Um ein Medium in den Schlitz 29 oder die Vorratskammer ein- oder nachzufüllen, muß der Benutzer den Schwammkörper 10 von entgegengesetzten Seiten unter Druck setzen, wie es in Fig. 15 durch die Pfeile P dargestellt ist. Dadurch verformt sich der Schwammkörper 10 derart, daß der Schlitz 29 öffnet und es ermöglicht, das Medium einzufüllen, wie ebenfalls in Fig. 15 dargestellt ist.

Fig. 16 zeigt einen Schwammkörper in nierenförmiger Ausgestaltung, der sich an einem Ende leicht verjüngt. Auch hierbei ist der Schwammkörper in seinem unteren Abschnitt 10b geöffnet, während er in seinem oberen Abschnitt 10a ungeöffnet ist und eine stabilisierende Außenhaut 13 trägt. In die Seiten des Schwammkörpers 10 sind Griffmulden 13a eingeformt. An einem Ende ist einstückig eine Aufhängelasche 30 angeformt, die nur in geringem Maße aufgeschäumt ist und somit eine erhöhte Stabilität aufweist. Wie Fig. 17 zeigt, besitzt der Schwammkörper 10 in seinem Inneren eine Vorratskammer 17 für Reinigungsmittel oder ein zu applizierendes Medium, die über einen Labyrinthkanal 31, der gleichzeitig als Verschluß dient, mit der Oberseite des Schwammkörpers verbunden ist.

Fig. 18 zeigt einen Schwammkörper 10, der in seinem unteren Bereich 10b geöffnet ist und auf seiner Oberseite eine eingeformte Vertiefung zur Bildung einer Vorratskammer 17 besitzt. Im oberen, ungeöffneten Bereich 10a des Schwammkörpers ist ein umlaufender Rastvorsprung 32 mit entsprechender Rastvertiefung ausgebildet, so daß ein separat vorgefertigtes Griffteil 14 mit angeformtem Stiel 14a auf die Oberseite des Schwammkörpers 10 aufrastbar ist, wobei es die Oberseite des Schwammkörpers und somit die Vorratskammer 17 deckelartig überdeckt. Das Griffteil 14 besitzt eine angeformte Klappe 14b, die gemäß Fig. 19 geöffnet werden kann, so daß ein Reinigungsmittel von oben in die Vorratskammer 17 des Schwammkörpers 10 eingefüllt werden kann.

Bei dem in Fig. 20 dargestellten Ausführungsbeispiel ist der Schwammkörper 10 auf seiner Außenseite mit Belägen kaschiert, die vor dem Aufschäumvorgang in den Formhohlraum des Formwerkzeugs eingelegt werden. Bei dem dargestellten Ausführungsbeispiel sind sowohl ein leicht abrasiver Belag 33 mit einer geringen Oberflächenstruktur und daneben ein stark abrasiver Belag 34 aufgebracht. Alternativ oder zusätzlich dazu kann der Schwammkörper 10 auch beflockt sein. Den Schwammkörper 10 gemäß Fig. 20 zeichnet desweiteren dadurch aus, daß in seinem Mittelbereich eine Einführöffnung 35 ausgebildet ist, in die eine Vorratspatrone 36 eingeschoben werden kann, die ein Reinigungsmittel oder ein zu applizierendes Medium enthält. Wenn die Patrone 36 leer ist, wird sie entweder durch eine neue Patrone ersetzt oder aus dem Schwammkörper 10 herausgeschoben und nachgefüllt, wie es in Fig. 21 dargestellt ist.

Gemäß Fig. 22 weist der Schwammkörper 10 eine beutelartige Form auf und kann als Reinigungshandschuh verwendet werden. Auf einer Seite ist über eine Trennwand 37 eine Vorratskammer 17 abgeteilt, in die das Reinigungsmittel eingefüllt werden kann. Die Vorratskammer 17 läßt sich am oberen Ende des beutelartigen Schwammkörpers verschließen, indem an der Seitenwand des Schwammkörpers ausgebildete Vorsprünge 38 in entsprechende Aufnahmen 39 der Trennwand 37 unter elastischer Verformung hineingedrückt werden, wie es in den Fig. 23 und 24 dargestellt ist.

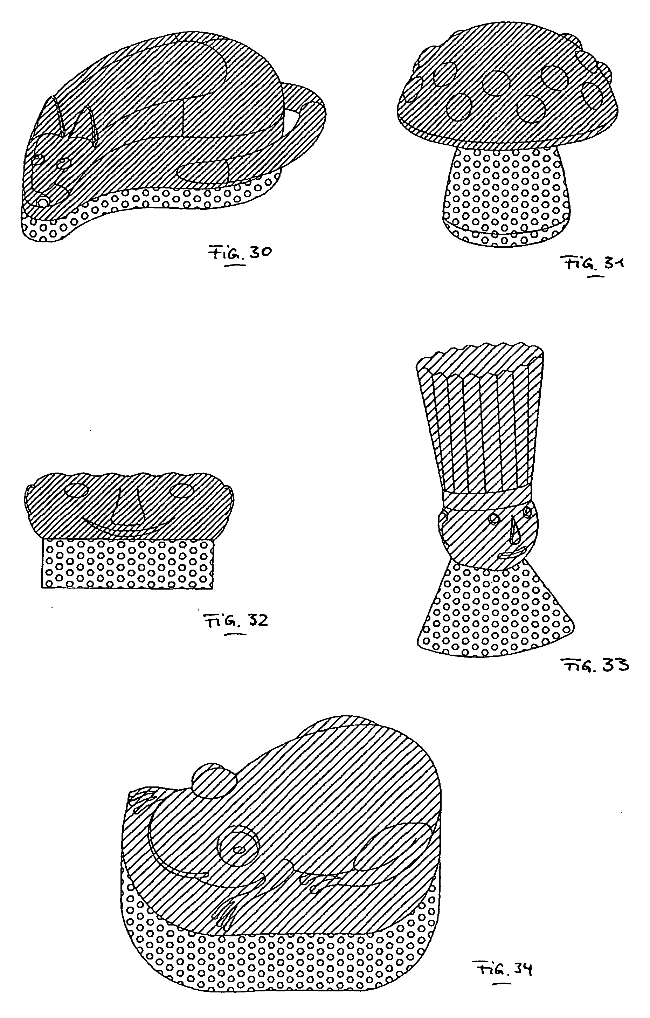

Damit der Benutzer bei Gebrauch des Schwammkörpers seine Hände nicht naß macht, kann in den Schwammkörper 10 ein Innenbeutel in Form eines Handschuhs 40 eingebettet sein, der von der Außenseite des Schwammkörpers zugänglich ist. Zusätzlich ist im Schwammkörper eine Vorratskammer für Reinigungsmittel ausgebildet, die über einen Verschlußstopfen 20, der über einen Verbindungssteg 19 einstückig mit dem Schwammkörper 10 verbunden ist, wahlweise geöffnet (Fig. 27) oder verschlossen werden kann (Fig. 26).

Gemäß der in Fig. 28 dargestellten Ausgestaltung sind auf der Unterseite, d.h. der Arbeitsfläche des Schwammkörpers Ausnehmungen 41 ausgeformt, in denen jeweils ein Borstenbündel 42 angeordnet ist, das vorzugsweise an seinem inneren Ende am Schwammkörper befestigt ist. Im Normalzustand des Schwammkörpers sind die Borstenbündel vollständig in den Ausnehmungen 41 des Schwammkörpers aufgenommen. Wenn das Schaummaterial des Schwammkörpers jedoch bei Gebrauch zusammengedrückt wird, treten die Borstenbündel unterseitig aus dem Schwammkörper hervor, wodurch eine Reinigungswirkung verstärkt wird.

Fig. 29 zeigt einen Schwammkörper, bei dem die stabile Außenhaut 13 im Bereich einer Seitenkante der unteren Arbeitsfläche stehengeblieben ist und somit eine Verstärkung der Kante bewirkt. Alternativ kann der Bereich der Kante beim Aufschäumen des Schwammkörpers auch geflockt oder mit einer Einlage versehen sein.

Die Fig. 30 bis 34 zeigen gegenständliche Ausgestaltungen eines Schwammkörpers, wie sie mit dem erfindungsgemäßen Aufschäumverfahren zu erzielen sind. Dabei sind sowohl Tierdarstellungen, wie beispielsweise die in Fig. 30 gezeigte Maus oder der in Fig. 34 dargestellte Frosch, als auch die Darstellung eines Pilzes gemäß Fig. 31, eines Gesichtes gemäß Fig. 32 für ein Kosmetik-Pad oder auch eine Topfbürste mit der Darstellung eines Kochs gemäß Fig. 33 möglich.

## Patentansprüche

1. Verfahren zur Herstellung eines Reinigungs- oder Applikationsschwammes, wobei ein Schwammkörper (10) in einem Formwerkzeug (11,12) zu der im wesentlichen endgültigen Bauform des Schwammes aufgeschäumt und auf der Außenoberfläche des Schwammkörpers (10) zumindest in Teilbereichen eine verfestigte Außenhaut (13) ausgebildet wird, die in einem nachfolgenden Verfahrensschritt zumindest bereichsweise geöffnet wird, wobei ein Bereich des Schwammkörpers (10) ungeöffnet bleibt, der einen Griffabschnitt bildet oder an dem ein Griffteil (14) anbringbar ist.

2. Verfahren nach Anspruche 1, **dadurch gekennzeichnet, daß** der Schwammkörper (10) eine innere geschlossenzellige Struktur aufweist, die in einem nachfolgenden Verfahrensschritt zumindest bereichsweise geöffnet wird.

3. Verfahren nach Anspruch 1 oder 2, **dadurch gekennzeichnet, daß** der Schwammkörper aus Polyurethan-Weichschaum besteht.

4. Verfahren nach einem der Ansprüche 1 bis 3, **dadurch gekennzeichnet, daß** der Schwammkörper (10) eine Schaumdichte von 25 kg/m³ bis 80 kg/m³ besitzt.

5. Verfahren nach einem der Ansprüche 1 bis 4, **dadurch gekennzeichnet, daß** der Schwammkörper aus mehreren unterschiedlich strukturierten Schwammkörperabschnitten besteht.

6. Verfahren nach Anspruch 5, **dadurch gekennzeichnet, daß** die Schwammkörperabschnitte vorgefertigt und anschließend zusammengefügt sind.

7. Verfahren nach Anspruch 6, **dadurch gekennzeichnet, daß** der Formhohlraum des Formwerkzeugs mit Trennwänden in mehreren Kammern unterteilt wird, in die jeweils unterschiedliche Schaummaterialien eingefüllt werden, und daß die Trennwände vor dem Ende des Aufschäumvorganges entfernt werden und die Schaummaterialien sich verbinden.

8. Verfahren nach Anspruch 7, **dadurch gekennzeichnet, daß** die Trennwände die Kammern nur in Teilbereichen voneinander trennen.

9. Verfahren nach einem der Ansprüche 1 bis 8, **dadurch gekennzeichnet, daß** in dem Schwammkörper eine Vorratskammer (17) und/oder ein Schlitz (29) für ein Reinigungsmedium oder ein zu applizierendes Medium mit einer auf der Außenseite des Schwammkörpers mündenden Füllöffnung ausgebildet wird.

10. Verfahren nach einem der Ansprüche 1 bis 9, **dadurch gekennzeichnet, daß** in den Schwammkörper (10) ein Innenbeutel (40) eingebettet wird, der von der Außenseite des Schwammkörpers zugänglich ist.

11. Verfahren nach Anspruch 10, **dadurch gekennzeichnet, daß** der Innenbeutel (40) ein Handschuh ist.

12. Verfahren nach einem der Ansprüche 1 bis 11, **dadurch gekennzeichnet, daß** an dem Schwammkörper eine Aufhängeöse (30) angeformt wird.

13. Verfahren nach einem der Ansprüche 1 bis 12, **dadurch gekennzeichnet, daß** an dem Schwammkörper ein Griffteil (14) angeformt wird.

14. Verfahren nach einem der Ansprüche 1 bis 13, **dadurch gekennzeichnet, daß** eine Arbeitsfläche des Schwammkörpers oberflächlich strukturiert wird.

15. Verfahren nach einem der Ansprüche 1 bis 14, **dadurch gekennzeichnet, daß** der Schwammkörper auf seiner Außenoberfläche abschnittsweise mit einem Belag (33,34) versehen wird.

16. Verfahren nach Anspruch 15, **dadurch gekennzeichnet, daß** der Belag vor dem Aufschäumen des Schäumkörpers in das Formwerkzeug eingelegt wird.

17. Verfahren nach einem der Ansprüche 1 bis 16, **dadurch gekennzeichnet, daß** Gegenstände in den Schaumkörper durch Umschäumen eingebettet werden.

18. Verfahren nach Anspruch 17, **dadurch gekennzeichnet, daß** es sich bei den Gegenständen um Aufhängeschlaufen oder Metallösen oder Stifte oder Borsten oder Silikonborsten handelt.

19. Reinigungs- oder Applikationsvorrichtung mit einem nach dem Verfahren gemäß einem der Ansprüche 1 bis 18 herstellbaren Schwammkörper, wobei an dem ungeöffneten Abschnitt des Schwammkörpers (10) ein Griff teil (14) angebracht ist.

20. Reinigungs- oder Applikationsvorrichtung nach Anspruch 19, **dadurch gekennzeichnet, daß** das Griffteil (14) mindestens eine Vorratskammer (17) für ein Reinigungsmedium oder ein zu applizierendes Medium bildet und daß das Medium von der Vorratskammer in den Schwammkörper einbringbar ist.

21. Reinigungs- oder Applikationsvorrichtung nach Anspruch 19 oder 20, **dadurch gekennzeichnet, daß** die Vorratskammer (17) zwischen dem Schwammkörper (10) und dem Griffteil (14) ausgebildet ist.

22. Reinigungs- oder Applikationsvorrichtung nach einem der Ansprüche 19 bis 21, **dadurch gekennzeichnet, daß** die Vorratskammer über eine Füllöffnung mit der Außenseite in Verbindung steht und daß die Füllöffnung mittels eines Verschlusses (14a;20;14b;29;31) verschließbar ist.

23. Reinigungs- oder Applikationsvorrichtung nach einem der Ansprüche 19 bis 22, **dadurch gekennzeichnet, daß** die Füllöffnung als Labyrinthkanal (31) ausgebildet ist.

24. Reinigungs- oder Applikationsvorrichtung nach Anspruch 22 oder 23, **dadurch gekennzeichnet, daß** der Verschluß einstückig an den Schwammkörper angeformt ist.

## Claims

1. Method for the manufacture of a cleaning or application sponge, wherein a sponge body (10) is foamed in a mould (11, 12) to the substantially final sponge shape and at least in partial areas of the outer surface of the sponge body (10) is formed a hardened outer skin (13) and, in a following method step, the outer skin (13) is at least zonally opened, wherein a gripping part (14) of the sponge body (10) remains unopened and which forms a handle section or on which a handle component can be introduced.

2. Method according to claim 1, **characterized in that** the sponge body (10) has an inner, closed-cell structure, which is at least zonally opened in a following method step.

3. Method according to one of the claims 1 or 2, **characterized in that** the sponge body comprises flexible polyurethane foam.

4. Method according to one of the claims 1 to 3, **characterized in that** the sponge body (10) has a foam density of 25 to 80 kg/m³.

5. Method according to one of the claims 1 to 4, **characterized in that** the sponge body comprises several, differently structured sponge body portions.

6. Method according to claim 5, **characterized in that** the sponge body portions are prefabricated and subsequently joined together.

7. Method according to claim 6, **characterized in that** the mould cavity is subdivided into several chambers by means of partitions and into each of them can be filled different foam materials and that before the end of the foaming process the partitions are removed and the foam materials are linked.

8. Method according to claim 7, **characterized in that** the partitions only separate the chambers from one another in partial regions.

9. Method according to one of the claims 1 to 8, **characterized in that** the sponge body contains a storage chamber (17) and/or a slit (29) for a cleaning medium or a medium to be applied with a filling opening issuing onto the outside of the sponge body.

10. Method according to one of the claims 1 to 9, **characterized in that** in the sponge body (10) is embedded an inner bag (40) accessible from the outside of the sponge body.

11. Method according to claim 10, **characterized in that** the inner bag (40) is a glove.

12. Method according to one of the claims 1 to 11, **characterized in that** a suspension ring (30) is shaped onto the sponge body.

13. Method according to one of the claims 1 to 12, **characterized in that** a gripping part is shaped onto the sponge body.

14. Method according to one of the claims 1 to 13, **characterized in that** a working surface of the sponge body is surface-structured.

15. Method according to one of the claims 1 to 14, **characterized in that** on its outer surface the sponge body is zonally provided with a coating (33, 34).

16. Method according to claim 15, **characterized in that** the coating is inserted in the mould prior to the foaming of the sponge body.

17. Method according to one of the claims 1 to 16, **characterized in that** objects are foamed around and embedded in the sponge body.

18. Method according to claim 17, **characterized in that** the objects are hanging loops or metal eyelets or pins or bristles or silicon bristles.

19. Cleaning or application device having a sponge body which can be produced by the method according to any one of the claims 1 to 18, wherein a gripping part (14) is introduced on the unopened portion of the sponge body (10).

20. Cleaning or application device according to claim 19, **characterized in that** the gripping part (14) forms at least one storage chamber (17) for a cleaning medium or a medium to be applied and that the medium can be introduced from the storage chamber into the sponge body.

21. Cleaning or application device according to claim 19 or 20, **characterized in that** the storage chamber (17) is formed between the sponge body (10) and gripping part (14).

22. Cleaning or application device according to one of the claims 19 to 21, **characterized in that** the storage chamber is connected to the outside by means of a filling opening and that the filling opening can be closed using a closure (14a, 20, 14b, 29, 31).

23. Cleaning or application device according to one of the claims 19 to 22, **characterized in that** the filling opening is constructed as a labyrinth channel (31).

24. Cleaning or application device according to claim 22 or 23, **characterized in that** the closure is shaped in one piece onto the foam body.

## Revendications

1. Procédé de fabrication d'une éponge de nettoyage ou d'application, dans lequel un corps spongieux (10) est expansé dans un outil de formage (11,12) pour lui donner sensiblement la forme définitive de l'éponge et dans lequel on forme sur la surface extérieure du corps spongieux (10) au moins dans des zones partielles une peau (13) rigidifiée que lors d'une étape ultérieure de procédé on ouvre au moins partiellement, tout en maintenant fermée une zone du corps spongieux (10) constituant une partie de préhension ou sur laquelle on peut monter une pièce de préhension (14).

2. Procédé selon la revendication 1, **caractérisé en ce que** le corps spongieux (10) présente une structure interne à alvéoles fermées que l'on ouvre au moins dans certaines zones lors d'une étape de procédé ultérieure.

3. Procédé selon la revendication 1 ou 2, **caractérisé en ce que** le corps spongieux est réalisé dans une mousse souple de polyuréthane.

4. Procédé selon l'une quelconque des revendications 1 à 3, **caractérisé en ce que** la densité de mousse du corps spongieux (10) est de 25 kg/m³ à 80 kg/m³.

5. Procédé selon l'une quelconque des revendications 1 à 4, **caractérisé en ce que** le corps spongieux et constitué de plusieurs portions de corps spongieux de structure différente.

6. Procédé selon la revendication 5, **caractérisé en ce que** les portions de corps spongieux sont préfabriquées et ensuite réunies.

7. Procédé selon la revendication 6, **caractérisé en ce que** l'espace creux de formage de l'outil de formage est subdivisé en plusieurs chambres par des parois de séparation, dans lesquelles on introduit à chaque fois des matériaux de moussage différents, et **en ce que** l'on enlève les parois de séparation avant la fin du processus d'expansion et que les matériaux de moussage se lient.

8. Procédé selon la revendication 7, **caractérisé en ce que** les parois de séparation ne séparent les chambres entre elles que dans des zones partielles.

9. Procédé selon l'une quelconque des revendications 1 à 8, **caractérisé en ce que** l'on conforme dans le corps spongieux une chambre de réserve (17) et/ou une fente (29) pour un produit de nettoyage ou un produit à appliquer présentant une ouverture de remplissage s'ouvrant sur la face extérieure du corps spongieux.

10. Procédé selon l'une quelconque des revendications 1 à 9, **caractérisé en ce que** l'on insère dans le corps spongieux (10) une poche intérieure (40) accessible de la face extérieure du corps spongieux.

11. Procédé selon la revendication 10, **caractérisé en ce que** la poche intérieure (40) est un gant.

12. Procédé selon l'une quelconque des revendications 1 à 11, **caractérisé en ce que** l'on forme sur le corps spongieux un anneau de suspension (30).

13. Procédé selon l'une quelconque des revendications 1 à 12, **caractérisé en ce que** l'on forme sur le corps spongieux une pièce de préhension (14).

14. Procédé selon l'une quelconque des revendications 1 à 13, **caractérisé en ce qu'**une surface de travail du corps spongieux est structurée superficiellement.

15. Procédé selon l'une quelconque des revendications 1 à 14, **caractérisé en ce que** le corps spongieux est pourvu sur sa surface extérieure dans certaines zones d'une garniture (33,34).

16. Procédé selon la revendication 15, **caractérisé en ce que** l'on insère la garniture dans l'outil de formage avant l'expansion du corps spongieux.

17. Procédé selon l'une quelconque des revendications 1 à 16, **caractérisé en ce que** l'on noie des objets dans le corps spongieux en les encapsulant dans la mousse.

18. Procédé selon la revendication 17, **caractérisé en ce que** les objets correspondent à des boucles de suspension ou des anneaux métalliques ou des brins rigides ou des poils ou des poils en silicone.

19. Dispositif de nettoyage ou d'application comprenant un corps spongieux réalisable conformément au procédé selon l'une quelconque des revendications 1 à 18, dans lequel on monte une pièce de préhension (14) sur la portion non ouverte du corps spongieux (10).

20. Dispositif de nettoyage ou d'application selon la revendication 19, **caractérisé en ce que** la pièce de préhension (14) constitue au moins une chambre de réserve (17) pour un produit de nettoyage ou un produit à appliquer et **en ce que** le produit peut être introduit de la chambre de réserve dans le corps spongieux.

21. Dispositif de nettoyage ou d'application selon la revendication 19 ou 20, **caractérisé en ce que** la chambre de réserve (17) est conformée entre le corps spongieux (10) et la pièce de préhension (14).

22. Dispositif de nettoyage ou d'application selon l'une quelconque des revendications 19 à 21, **caractérisé en ce que** la chambre de réserve communique avec l'extérieur par l'intermédiaire d'une ouverture de remplissage et **en ce que** l'ouverture de remplissage peut être fermée au moyen d'une fermeture (14a;20;14b;29;31).

23. Dispositif de nettoyage ou d'application selon l'une quelconque des revendications 19 à 22, **caractérisé en ce que** l'ouverture de remplissage est conformée en canal-labyrinthe (31).

24. Dispositif de nettoyage ou d'application selon la revendication 22 ou 23, **caractérisé en ce que** la fermeture est formée d'une seule pièce sur le corps spongieux.
